**Europäisches Patentamt**

(19) **European Patent Office**

**Office européen des brevets**

(11) Veröffentlichungsnummer: **0 096 324**
**B1**

(12) **EUROPÄISCHE PATENTSCHRIFT**

(45) Veröffentlichungstag der Patentschrift:
04.09.85

(51) Int. Cl.⁴: **A 23 L 2/34**

(21) Anmeldenummer: 83105311.1

(22) Anmeldetag: 30.05.83

(54) Verfahren zum Verflüssigen von Obst- und Gemüsemaischen und -säften.

(30) Priorität: 08.06.82 DE 3221576

(43) Veröffentlichungstag der Anmeldung:
21.12.83 Patentblatt 83/51

(45) Bekanntmachung des Hinweises auf die Patenterteilung:
04.09.85 Patentblatt 85/36

(84) Benannte Vertragsstaaten:
DE FR GB IT

(56) Entgegenhaltungen:
DE - A - 2 607 532
DE - A - 2 746 884
US - A - 3 754 932

(73) Patentinhaber: **Röhm GmbH, Kirschenallee
Postfach 4242, D-6100 Darmstadt 1 (DE)**

(72) Erfinder: **Schmitt, Reinhold, Annastrasse 67,
D-6144 Zwingenberg (DE)**
Erfinder: **Grampp, Ekkehard, Dr.,
Erich-Kästner-Strasse 27, D-6073 Egelsbach-Bayerseich
(DE)**
Erfinder: **Uhlig, Helmut, Dr., Auf dem Wingert 4,
D-6101 Rossdorf 1 (DE)**

## Beschreibung

### Gebiet der Erfindung

Die Erfindung betrifft allgemein die Verflüssigung von Obst- und Gemüsemaischen und die Klärung von Obst- und Gemüsesäften, was erfindungsgemäss in beiden Fällen durch den Abbau von Hemizellulosen, insbesondere Galactomannan geschieht. Die Erfindung umfasst sowohl die Verflüssigung von Maischen, die durch Zermahlen ganzer Früchte gewonnen wurden, zu gut handhabbaren Presssäften als auch die weitere Behandlung von Presssäften und Pülpen zum Zwecke der Schönung oder der Herstellung von Konzentraten oder von Trockenprodukten. In allen genannten Fällen besteht das Ziel des Verfahrens darin, die nicht voll löslichen, Wasser stark zurückhaltenden Gewebebestandteile so aufzuschliessen, dass eine möglichst weitgehende Trennung der gelösten von den ungelösten Bestandteilen ermöglicht wird.

### Stand der Technik

Seit langem ist es gebräuchlich, die in Maischen, Pülpen und Säften enthaltenen Pektine mittels Pektinasen abzubauen, wodurch meistens eine erhebliche Verflüssigung erreicht wird. Da man vermutet hat, dass weitere Wasser zurückhaltende Fruchtbestandteile von cellulosischer Natur sind, hat man durch die gemeinsame Anwendung von Pektinasen und Cellulasen eine weitergehende Verflüssigung zu erreichen versucht (R. Schmitt, «Flüssiges Obst», 1981, S. 258). Bei manchen Früchten, besonders solchen mit hohem Pektingehalt, wie schwarzen Johannisbeeren und Amerikaner-Trauben, wird damit jedoch keine entscheidende Verbesserung der Saftausbeute erreicht. Das Pektin bildet mit dem Saft eine kolloide Lösung, welche Wasser bindet und in der Maische zurückhält. Die hohe Viskosität erschwert oder verhindert den Saftabfluss aus dem Kapillarnetz der Maische (vgl. Schobinger, «Frucht- und Gemüsesäfte», Handbuch der Getränketechnologie, Stuttgart 1978, S. 122). Diese Schwierigkeiten lassen sich durch den Einsatz von pektolytischen Enzymen nicht überwinden.

Unter den pektolytischen Enzympräparaten gibt es auch solche, die Galactomannanase als Begleitenzym enthalten (vgl. Schobinger, loc. cit., S. 109). Die Aktivität dieses Begleitenzyms liegt stets weit unter 20 mU/mg, so dass ein spürbarer Einfluss der Galactomannanase selbst bei hohen Enzymdosierungen nicht zu erwarten war. Spezifische Wirkungen dieses Enzyms bei der Behandlung von Maischen, Pülpen und Säften waren ohnehin bisher nicht bekannt.

### Aufgabe und Lösung

Die Verflüssigung von Obst- und Gemüsemaischen soll verbessert, die Saftausbeute erhöht, Inhaltsstoffe in höherem Masse freigesetzt und bei Säften bei Bedarf an Schönungsmitteln herabgesetzt werden. Dieses Ziel wird erfindungsgemäss durch den Einsatz eines Galactomannanase-Präparats in der beanspruchten Dosierung erreicht.

### Vorteile

Es wurde festgestellt, dass die wasserbindenden Strukturen in Maischen, Pülpen und Säften in vielen Fällen auf der Anwesenheit von Galactomannanen, die zur Gruppe der Hemicellulosen gehören, beruhen. Der spezielle Abbau dieser Stoffe mittels Galactomannanase führt zu einer merklichen Verflüssigung, die natürlich, sofern gleichzeitig lösliche Pektine vorhanden sind, durch Mitverwendung üblicher Pektinasen unterstützt werden muss. Frucht- und Gemüsemaischen erhalten durch das erfindungsgemässe Verfahren eine Beschaffenheit, die das Passieren durch ein Sieb wesentlich erleichtert. Die Abtrennung von Trübstoffen und festen Fruchtbestandteilen gelingt häufig unter Verzicht auf Pressen allein durch Zentrifugieren. Man erhält nicht nur eine höhere Saftausbeute, sondern der erhaltene Saft ist infolge der vollständigen Verflüssigung der Gesamtfrucht (mit Ausnahme von Kernen, Stielen, harten Schalen oder anderen faserigen Gewebeteilen) auch reicher an Inhaltsstoffen. Dazu zählen vornehmlich auch die Farb- und Aromastoffe. Die schonende Behandlung gewährleistet eine hohe Geschmacksqualität und einen der natürlichen Frucht nahekommenden Gehalt an Inhaltsstoffen.

### Anwendung

Obwohl die Verflüssigung von Maischen und Pülpen und die Klärung von Säften bei zahlreichen Verfahren der Frucht- und Gemüseverarbeitung eine Rolle spielen und dementsprechend eine Vielzahl von Anwendungsgebieten für das erfindungsgemässe Verfahren besteht, sind drei Anwendungsbereiche besonders hervorzuheben:

1. die Saftgewinnung aus noch nicht enzymatisch vorbehandelten Obst- und Gemüsemaischen,

2. die Klärung von Säften nach vorausgegangener Pektinasebehandlung, wobei der Klärmittelbedarf drastisch gesenkt wird,

3. die Herstellung von konzentrierbaren Säften und Pülpen, wobei vor allem die Gelierung des Konzentrats vermieden wird. Die Konzentrierung kann bis zur Stufe eines noch fliessfähigen Konzentrats oder bis zum Trockenprodukt geführt werden.

### Die Früchte

Die erfindungsgemäss zu verarbeitenden Maischen, Pülpen und Säfte können aus nahezu allen einheimischen und exotischen Früchten gewonnen werden. Unter den Obstsorten ist vor allem Beerenobst zu nennen, wie rote und schwarze Johannisbeeren, Himbeeren, Erdbeeren, Weintrauben, insbesondere amerikanische Sorten wie Concord- oder Thompson-Trauben. Andere geeignete Obstarten sind Kernobst, wie Äpfel, Birnen oder Quitten, Steinobst wie Pfirsiche, Aprikosen, Kirschen, Pflaumen, Zwetschgen, Südfrüchte und Tropenfrüchte wie Marakuja, Papaja, Mango, Guava, Kiwi, Ananas, Bananen sowie gegebenenfalls auch Citrusfrüchte. Verwertbare Gemüsesorten sind z.B. Sellerie, Spargel, Paprika und Tomaten.

In der Regel werden die Früchte nach dem Waschen und Verlesen grob zerkleinert, gequetscht, geschnitzelt oder gemahlen und die erhaltenen Maischen können dann sofort erfindungsgemäss behandelt werden. Die erfindungsgemäss zu klärenden Säfte können nach herkömmlichen Verfahren aus den genannten Früchten bzw. Maischen gewonnen worden sein, oder man kann die erfindungsgemäss aus Maischen gewonnenen Säfte zur Klärung einsetzen.

*Die Enzyme*

Galactomannanasen kommen in vielen technischen Enzymprodukten vor und sind, wie erwähnt, als Begleitenzym in manchen Pektinasepräparaten enthalten. Für das Verfahren der Erfindung eignen sich solche Präparate, die wenigstens 20 mU Galactomannanase-Aktivität je Milligram aufweisen. Sie lassen sich nach üblichen Anreicherungs- bzw. Fraktionierungsverfahren aus Präparaten von geringerer Aktivität gewinnen. Aus bestimmten Aspergillus niger-Kulturen werden unmittelbar geeignete Galactomannanase-Präparate hergestellt, die im Handel meistens als Cellulase-Präparate erhältlich sind. Geeignete Stämme lassen sich durch übliche Screening-Verfahren auffinden und können durch Optimieren der Kultivationsbedingungen zur Erzeugung eines technisch geeigneten Enzympräparats angeregt werden. Die Aktivität wird durch Abbau von Guarmehl in 0,5%iger Konzentration bei 30°C, pH 4,5 bestimmt. 1 mU ist diejenige Aktivität, die dabei pro Minute 1 $\mu$Mol Mannose freisetzt. Die erforderliche Menge von 50 bis 1000 ppm des Enzympräparats ist auf das Gesamtgewicht der zu behandelnden Maische, Pülpe oder des Saftes berechnet. Die bevorzugte Dosierungsmenge liegt im Bereich von 200 bis 500 ppm. Falls Enzymprodukte von geringerer Aktivität eingesetzt werden, ist die eingesetzte Menge entsprechend grösser zu wählen und umgekehrt.

Vorzugsweise wird die Galactomannanase in Kombination mit einer Pektinase, insbesondere vom PE/PG-Typ eingesetzt. Geeignet sind handelsübliche Pektinasen für die Saftbehandlung. Die aus Aspergillus niger-Kulturen erzeugte Galactomannanase weist von Natur aus eine ausreichende Pektinase-Aktivität auf. Die Pektinase wird vorzugsweise so dosiert, dass auf 20 mU Galactomannanase-Aktivität etwa 20 PA Pektinase-Aktivität entfallen, wobei die letztere so definiert ist, dass die PA der Menge eines standardisierten Apfelsaftes in Liter entspricht, die von 1 g der betreffenden Pektinase unter genormten Bedingungen (2 Stunden, 30°C) entpektinisiert wird. Die Pektinase-Behandlung kann getrennt von der Galactomannanase-Behandlung stattfinden und dieser beispielsweise vorausgehen. Es wird jedoch auch in diesem Falle bevorzugt, dass während der Galactomannanase-Behandlung wenigstens noch ein Teil der Pektinase-Aktivität vorhanden ist.

*Arbeitsweise*

Die Enzymbehandlung kann beim natürlichen pH-Wert der Frucht durchgeführt werden. In der Regel wird zwischen 2,5 und 6,5 gearbeitet. Die Temperatur kann während der Enzymeinwirkung im Bereich von 15 bis 60°C liegen. Eine erhöhte Temperatur von 45 bis 60°C ist vorteilhaft; am günstigsten 45-55°C. Man lässt die Enzyme unter leichtem Rühren 15 min bis 2 Stunden, bei niedriger Temperatur auch länger, einwirken.

In vielen Fällen können die Feststoffe aus der behandelten Maische oder Pülpe durch Zentrifugieren abgetrennt werden, während bei der Herstellung klarer Säfte durch Behandlung mit Pektinasen allein oder in Kombination mit Cellulase das Pressen unerlässlich ist. Selbstverständlich können die Feststoffe gewünschtenfalls auch mit einer Presse oder mittels eines Vakuumfilters abgetrennt werden.

Der auf diese Weise erhaltene Saft kann in herkömmlicher Weise weiterverarbeitet werden. Eine Entaromatisierung wird zweckmässig vor der Trubabtrennung durchgeführt.

Säfte aus behandelten oder unbehandelten Maischen können vor der Schönung erfindungsgemäss der Einwirkung von Galactomannanasen und gegebenenfalls Pektinasen ausgesetzt werden. Danach lässt sich der Grobtrub leicht durch die oben beschriebenen Massnahmen, am einfachsten durch Zentrifugieren, abtrennen. Dies wird bei manchen Säften, z.B. Ananassaft, durch das erfindungsgemässe Verfahren erstmalig ermöglicht. Bei der anschliessenden Schönung kommt man mit einer deutlich verminderten Menge an Klärmitteln, wie Bentonit, Gelatine und Kieselsol, aus, als wenn man den Saft nur mit Pektinasen behandelt hätte. Das bei der Schönung entstehende Depot ist dichter und weniger voluminös, so dass die Ausbeute an blankem Saft verbessert wird.

*Beispiele*

*1. Verbesserung der Pressbarkeit einer Maische von Concord-Trauben, d.h. Erhöhung der frei ablaufenden Saftmenge (Tropfsaft) und der Ausbeute an Presssaft. (Vergleich der Wirkung einer Galactomannanase mit einer Pectinase und einem Gemisch von Galactomannanase und Pectinase.)*

Concord-Trauben (Ostküste USA) wurden entrappt, gemahlen und auf 55°C erwärmt. Die Maische wurde in Portionen zu 3 × 5 kg Ansätzen aufgeteilt und in temperierbaren Doppelmantelgefässen gerührt.

Zu Ansatz 1 wurden 2 g einer Pektinase mit 20 PA gegeben. Ansatz 2 erhielt 2 g einer Galactomannanase mit 50 mUGal/mg.

Ansatz 3 wurde mit 1 g Pectinase mit 20 PA und 1 g Galactomannanase mit 50 mUGal/mg versetzt.

Nach einer Einwirkungszeit von 1 Stunde unter Rühren wurden die Ansätze über ein Sieb vorentsaftet und die Tropfsaftmenge bestimmt. Der Siebrückstand wurde mit einer hydraulischen Presse entsaftet, der Presssaft mit dem Tropfsaft vermischt und die Gesamtausbeute bestimmt. Nach Klärung und Filtration der einzelnen Säfte wurde die Farbtiefe durch colorimetrische Messung bei 520 nm bestimmt.

| Ergebnis | Ansatz | | |
|---|---|---|---|
| | 1 | 2 | 3 |
| Tropfsaft g/% | 2100/42 | 2400/48 | 2650/53 |
| Gesamtsaft g/% | 3600/72 | 3950/79 | 4100/82 |
| Farbtiefe (E 520 nm) | 0,185 | 0,215 | 0,232 |

*2. Verflüssigung von roter Traubenmaische (chilenische Trauben) zur Herstellung eines Gesamtfruchtkonzentrats.*

10 kg entrappte, gemahlene und kurz auf 80° C erhitzte Trauben wurden bei Wiederabkühlung auf 50° C mit 4 g einer Pectinase mit 20 PA und 4 g Galactomannanase mit 50 mUGal/mg versetzt und die Enzyme 30 min unter schnellem Rühren einwirken lassen.

Die verflüssigte Maische wurde durch Passieren von Kernen und Schalenteilen befreit. Die passierte Pülpe mit dem noch wirksamen Enzymgemisch wurde unter Rühren mit einem Turbinenrührer innerhalb 30 min weiter in der Viskosität gesenkt. Die homogene flüssige Masse wurde im Vakuum bei 30° C schonend auf 54° Brix eingedickt.

Es wurde ein noch fliessfähiges Ganzfruchtkonzentrat mit 54% löslicher Trockensubstanz erhalten. Der Passierrückstand betrug 5,4%. Im Vergleich dazu kann mit einer Pectinasebehandlung allein nur bis max. 35-45° Brix aufkonzentriert werden.

*3. Verflüssigung von Apfelmaische zur Herstellung eines klaren Saftes.*

5 kg Äpfel wurden gemahlen und bei 20° C mit einem Enzympräparat versetzt, das eine Wirksamkeit von 20 PA und 50 mUGal/mg aufwies. Die Dosage betrug 1000 ppm (5 g/5 kg). Die Reaktionszeit unter schnellem Rühren betrug 1 Stunde. Danach wurde passiert und die Pülpe eine weitere Stunde unter Rühren mit einem Turbinenrührer weiter verflüssigt.

Der Passierrückstand (Schalenteile, Kerne, Kerngehäuse) betrug nur 2% des Fruchtgewichts. Die verflüssigte Pülpe konnte durch Zentrifugieren vom Trub befreit werden. Der Zentrifugenschlamm wurde in einer Filterpresse weiter entsaftet.

Die Gesamtausbeute betrug 89%. Der Saft konnte auf herkömmliche Weise geschönt und filtriert werden.

*4. Klärung von stark trübem Ananassaft durch Enzymvorbehandlung und Schönungsmittel. (Vergleich der Einwirkung von Pectinase bzw. Galactomannanase allein mit einem Gemisch aus Pectinase/Galactomannanase.)*

Je 1 Liter Ananassaft mit 15° Brix wurde bei 20° C versetzt mit

1. 50 ppm einer Pectinase mit 20 PA

2. 50 ppm einer Galactomannanase mit 50 mUGal/mg

3. 50 ppm eines Enzymgemisches mit 20 PA und 50 mUGal/mg Einwirkungszeit 1 Stunde bei 20° C. Die Ansätze wurden zentrifugiert und mit Bentonit und Kieselsol geschönt, nachdem an einer Saftprobe der minimale Schönungsmittelbedarf ermittelt worden war. Nach Absetzen des Schönungstrubs wurde die Trübung des Überstandes gemessen.

*Ergebnis:*

| Ansatz: Schönungsmittelbedarf (g/hl) | 1 | 2 | 3 |
|---|---|---|---|
| Bentonit | 120 | 100 | 75 |
| Kieselsol 15% | 60 | 50 | 38 |
| Trübung (NTU) * | 40 | 20 | 13 |
| * NTU=Nephelometric Turbidity Units | | | |

## Patentansprüche

1. Verfahren zum Verflüssigen von Obst- und Gemüsemaischen und zum Klären von Säften durch Einwirkung von Enzymen, dadurch gekennzeichnet, dass man die Maischen oder Säfte mit 50 bis 1000 ppm eines Galactomannanase-Präparates behandelt, das mindestens 20 mUGal/mg dieser Enzymaktivität aufweist.

2. Verfahren nach Anspruch 1, dadurch gekennzeichnet, dass man gleichzeitig eine Pectinase einwirken lässt.

3. Verfahren nach den Ansprüchen 1 und 2, dadurch gekennzeichnet, dass man nach der Einwirkung des Enzyms ungelöste Anteile der behandelten Obst- und Gemüsemaischen und -säfte durch Zentrifugieren abtrennt.

## Claims

1. Process for liquefying fruit and vegetable mashes and for clarifying juices by the action of enzymes, characterized in that the mashes or juices are treated with 50-1000 ppm of a galactomannanase preparation which has at least 20 mUGal/mg of this enzyme activity.

2. Process as claimed in Claim 1, characterized in that a pectinase is simultaneously used.

3. Process as claimed in Claims 1 and 2, characterized in that, after the action of the enzyme, undissolved parts of the treated fruit and vegetable mashes and juices are removed by centrifugation.

## Revendications

1. Procédé pour la fluidification de moûts de fruits et de légumes et pour la clarification de jus sous l'action d'enzymes, caractérisé en ce qu'on traite les moûts ou jus par 50 à 1000 ppm d'une préparation de galactomannanase qui présente au moins 20 mU gal/mg d'activité de cet enzyme.

2. Procédé selon la revendication 1, caractérisé en ce qu'on fait agir en même temps une pectinase.

3. Procédé selon les revendications 1 et 2, caractérisé en ce qu'après l'action de l'enzyme, on sépare par centrifugation les fractions non dissoutes des moûts et jus de fruits et de légumes traités.